# EUROPEAN PATENT APPLICATION

(11) **EP 4 694 288 A1**
(43) Date of publication of application: **11.02.2026**
(21) Application number: 24791805.5
(22) Date of filing: 20.03.2024
(51) Int. Cl.: H04W 24/04

(54) **NETWORK CONFIGURATION METHOD AND COMMUNICATION APPARATUS**

(30) Priority: 17.04.2023 CN 202310450721
(71) Applicant: Huawei Technologies Co., Ltd., Shenzhen, Guangdong 518129 (CN)
(72) Inventor: WANG, Fei, Shenzhen, Guangdong 518129 (CN); DENG, Chengliang, Shenzhen, Guangdong 518129 (CN)
(74) Representative: Körber, Martin Hans
(86) International application number: PCT/CN2024/082826
(87) International publication number: WO 2024/217218

(57) **Abstract**

A network configuration method and a communication apparatus are provided. The method includes: if a terminal device has subscribed to NSA dual connectivity and first capability information indicates that the terminal device does not support first dual connectivity, sending a second message to a network device, to indicate not to query for second capability information of the terminal device and to set up initial context information of the terminal device; and receiving a third message from the network device, where the third message includes the initial context information set up by the network device, and the initial context information includes network configuration information that is of the terminal device and that corresponds to a second-type network device, and does not include network configuration information that is of the terminal device and that corresponds to a first-type network device. The dual connectivity includes the first dual connectivity and second dual connectivity. The first dual connectivity is dual connectivity in which both a master base station and a secondary base station of the terminal device are first-type network devices. The second dual connectivity is dual connectivity in which a master base station of the terminal device is a second-type network device and a secondary base station is a first-type network device. According to this application, communication quality of the terminal device can be ensured.

## Description

This application claims priority to Chinese Patent Application No. 202310450721.1, filed with the China National Intellectual Property Administration on April 17, 2023, and entitled "NETWORK CONFIGURATION METHOD AND COMMUNICATION APPARATUS", which is incorporated herein by reference in its entirety.

### TECHNICAL FIELD

This application relates to the field of communication technologies, and in particular, to a network configuration method and a communication apparatus.

### BACKGROUND

A 5th generation mobile communication (5th generation mobile communication, 5G) supports a standalone (standalone, SA) architecture and a non-standalone (non-standalone, NSA) architecture. The NSA architecture is an architecture in which an existing infrastructure of a 4th generation mobile communication (4th generation mobile communication, 4G) system is used for deployment of a 5G network.

Based on a protocol requirement, a terminal device may work normally in the NSA architecture to implement an NSA service only when capability information reported by the terminal device indicates that both dual connectivity with new radio (dual connectivity with new radio, DCNR) and radio access network and new radio access dual connectivity (EUTRAN-new radio dual connectivity, ENDC) are supported. For exceptions such as terminal overheat protection, the terminal device may choose to report that the DCNR is not supported. In this case, if the terminal device has reported that the ENDC is supported, a service exception, for example, an abnormal service drop, may be caused for the terminal device in a 4G network or the 5G network. Consequently, communication quality of the terminal device is affected.

### SUMMARY

Embodiments of this application provide a network configuration method and a communication apparatus, to ensure communication quality of a terminal device.

According to a first aspect, an embodiment of this application provides a network configuration method. The method may be performed by a mobility management device, or may be performed by an apparatus matching the mobility management device, for example, performed by a processor, a chip, or a chip system. The method may include: when receiving a first message from a network device, obtaining service subscription information of a terminal device from a home management device, where the first message includes first capability information of the terminal device; when the first capability information indicates that the terminal device does not support first dual connectivity, and the service subscription information indicates that the terminal device has subscribed to NSA dual connectivity, sending a second message to the network device, where the second message is used for requesting the network device to set up initial context information of the terminal device, the second message indicates the network device not to query for second capability information of the terminal device, and the second capability information indicates that the terminal device supports or does not support second dual connectivity; and receiving a third message from the network device, where the third message includes the initial context information, and the initial context information includes network configuration information that is of the terminal device and that corresponds to a second-type network device, and does not include network configuration information that is of the terminal device and that corresponds to a first-type network device. The dual connectivity includes the first dual connectivity and the second dual connectivity. The first dual connectivity is dual connectivity in which both a master base station and a secondary base station of the terminal device are first-type network devices. The second dual connectivity is dual connectivity in which a master base station of the terminal device is a second-type network device and a secondary base station of the terminal device is a first-type network device.

It can be learned that when the terminal device has subscribed to the NSA dual connectivity, and the reported first capability information indicates that the terminal device does not support the first dual connectivity, the mobility management device may actively indicate the network device not to query whether the terminal device supports the second dual connectivity, so that the initial context information set up by the network device includes the network configuration information that is of the terminal device and that corresponds to the second-type network device, and does not include the network configuration information that is of the terminal device and that corresponds to the first-type network device. In other words, the terminal device is not configured with network configuration information needed for performing dual connectivity. Based on this, the terminal device may perform secure and stable communication with the mobility management device through the second-type network device, to ensure communication quality of the terminal device. In addition, the NSA dual connectivity is not performed, so that a service drop can be avoided for the terminal device in an NSA dual connectivity scenario.

In a possible implementation, the foregoing method may further include: communicating with the terminal device based on the initial context information that has been set up.

It can be learned that the mobility management device communicates with the terminal device based on the initial context information that has been set up, so that the communication quality of the terminal device can be ensured.

In a possible implementation, the first message may further include identity information of the terminal device; and the foregoing method may further include: sending authentication request information to the home management device, where the authentication request information includes the identity information of the terminal device; and receiving authentication response information from the home management device, where the authentication response information indicates that identity authentication on the terminal device succeeds.

It can be learned that the home management device may perform authentication on the terminal device based on the identity information of the terminal device, so that the mobility management device obtains the service subscription information of the terminal device from the home management device.

In a possible implementation, a method for obtaining the service subscription information of the terminal device from the home management device may specifically include: sending subscription query information to the home management device, where the subscription query information includes the identity information of the terminal device; and receiving subscription query response information from the home management device, where the subscription query response information includes the service subscription information of the terminal device.

It can be learned that the mobility management device obtains the service subscription information of the terminal device from the home management device, to determine that the terminal device has subscribed to the NSA dual connectivity.

According to a second aspect, an embodiment of this application provides a network configuration method. The method may be performed by a network device, or may be performed by an apparatus matching the network device, for example, performed by a processor, a chip, or a chip system. The method may include: receiving a second message from a mobility management device, where the second message corresponds to first capability information, the second message is used for requesting to set up initial context information of a terminal device, and the second message indicates the network device not to query for second capability information of the terminal device; obtaining radio capability information of the terminal device from the terminal device based on the second message, where the radio capability information does not include the second capability information; generating the initial context information of the terminal device based on the radio capability information; and sending a third message to the mobility management device, where the third message includes the initial context information of the terminal device. The second capability information indicates that the terminal device supports or does not support second dual connectivity, where the second dual connectivity is dual connectivity in which a master base station of the terminal device is a second-type network device, and a secondary base station of the terminal device is a first-type network device. The initial context information includes network configuration information that is of the terminal device and that corresponds to the second-type network device, and does not include network configuration information that is of the terminal device and that corresponds to the first-type network device.

It can be learned that the network device may not query, based on the received second message, whether the terminal device supports the second dual connectivity, and set up the initial context information for the terminal device based on the found radio capability information of the terminal device. The initial context information includes the network configuration information that is of the terminal device and that corresponds to the second-type network device, but does not include the network configuration information that is of the terminal device and that corresponds to the first-type network device. In other words, the network device does not need to configure, for the terminal device, network configuration information needed for performing NSA dual connectivity. Based on this, this helps the terminal device and the mobility management device perform secure and stable communication through the second-type network device, to ensure communication quality of the terminal device. In addition, the terminal device does not perform NSA dual connectivity, so that a service drop can be avoided for the terminal device in an NSA dual connectivity scenario.

In a possible implementation, a fourth message is sent to the terminal device, where the fourth message indicates the terminal device to report the radio capability information, and the radio capability information does not include the second capability information; and the radio capability information is received from the terminal device.

It can be learned that the network device may obtain the radio capability information from the terminal device based on the fourth message. In other words, the network device may indicate, based on the fourth message, the terminal device not to report the second capability information.

In a possible implementation, the foregoing method may further include: sending radio resource control RRC connection reconfiguration information to the terminal device, where the RRC connection reconfiguration information includes the initial context information. The foregoing method for sending the third message to the mobility management device may further include: sending the third message to the mobility management device when receiving RRC connection reconfiguration complete information from the terminal device.

It can be learned that the network device may set up the initial context information based on an RRC connection reconfiguration process of the terminal device.

In a possible implementation, the foregoing method may further include: receiving attach request information from the terminal device, where the attach request information includes the first capability information of the terminal device; and sending a first message to the mobility management device, where the first message includes the first capability information.

It can be learned that the network device may obtain the first capability information of the terminal device based on the attach request information of the terminal device, and forward the first capability information to the mobility management device based on the first message.

According to a third aspect, an embodiment of this application provides a communication apparatus. The communication apparatus includes a module/unit configured to perform the method according to any one of the first aspect and the possible implementations of the first aspect.

According to a fourth aspect, an embodiment of this application provides a communication apparatus. The communication apparatus includes a module/unit configured to perform the method according to any one of the second aspect and the possible implementations of the second aspect.

According to a fifth aspect, an embodiment of this application provides a communication apparatus. The apparatus may be a mobility management device, or may be a chip, a chip system, a processor, or the like that supports the mobility management device in implementing the foregoing methods, or may be a logical node, a logical module, or software that can implement all or some terminal functions. The communication apparatus may alternatively be the chip system. The communication apparatus may perform the method according to the first aspect. A function of the communication apparatus may be implemented by hardware, or may be implemented by hardware by executing corresponding software. The hardware or the software includes one or more units corresponding to the function. The unit may be software and/or hardware. For operations performed by the communication apparatus and beneficial effects thereof, refer to the method according to the first aspect and the beneficial effects thereof. Details are not described again.

According to a sixth aspect, an embodiment of this application provides a communication apparatus. The apparatus may be a network device, or may be a chip, a chip system, a processor, or the like that supports the network device in implementing the foregoing methods, or may be a logical node, a logical module, or software that can implement all or some functions of the network device. The communication apparatus may alternatively be the chip system. The communication apparatus may perform the method according to the second aspect. A function of the communication apparatus may be implemented by hardware, or may be implemented by hardware by executing corresponding software. The hardware or the software includes one or more units corresponding to the function. The unit may be software and/or hardware. For operations performed by the communication apparatus and beneficial effects thereof, refer to the method according to the second aspect and the beneficial effects thereof. Details are not described again.

According to a seventh aspect, an embodiment of this application provides a computer-readable storage medium. The computer-readable storage medium stores a computer program, and the computer program includes program instructions. When the program instructions are run on a communication device, the method performed by the mobility management device in the method according to the first aspect is implemented, or the method performed by the network device in the method according to the second aspect is implemented.

According to an eighth aspect, an embodiment of this application provides a computer program product. When the computer program is executed, the method performed by the mobility management device in the method according to the first aspect is implemented, or the method performed by the network device in the method according to the second aspect is implemented.

According to a ninth aspect, an embodiment of this application provides a communication system, including a communication apparatus (for example, a mobility management device) configured to perform the method according to the first aspect and a communication apparatus (for example, a network device) configured to perform the method according to the second aspect.

### BRIEF DESCRIPTION OF DRAWINGS

FIG. 1 is a diagram of a structure of a communication system according to an embodiment of this application;
FIG. 2 is a diagram of two types of NSA dual connectivity according to an embodiment of this application;
FIG. 3 is a schematic flowchart of secondary base station addition according to an embodiment of this application;
FIG. 4 is a schematic flowchart of a network configuration method according to an embodiment of this application;
FIG. 5 is a diagram of a structure of a communication apparatus according to an embodiment of this application; and
FIG. 6 is a diagram of a structure of another communication apparatus according to an embodiment of this application.

### DESCRIPTION OF EMBODIMENTS

The following describes embodiments of this application with reference to the accompanying drawings in embodiments of this application.

In the specification, the claims, and the accompanying drawings of this application, terms such as "first", "second", "third", and "fourth" are intended to distinguish between different objects rather than indicate a particular order. In addition, the terms "include", "have" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

It should be understood that, in this application, "at least one piece (item)" means one or more, and "a plurality of" means two or more. The term "and/or" is used for describing an association relationship between associated objects, and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof indicates any combination of these items, including any combination of singular items (pieces) or plural items (pieces). For example, at least one of a, b, or c may indicate a, b, c, "a and b", "a and c", "b and c", or "a, b, and c", where a, b, and c may be singular or plural.

An "embodiment" mentioned in this specification means that a particular feature, structure, or characteristic described with reference to the embodiment may be included in at least one embodiment of this application. The phrase shown in various locations in the specification may not necessarily refer to a same embodiment, and is not a separate or alternative embodiment exclusive from another embodiment. It is explicitly and implicitly understood by persons skilled in the art that embodiments described in the specification may be combined with another embodiment.

To better understand embodiments of this application, the following first describes a system architecture in embodiments of this application.

Embodiments of this application may be applied to a long term evolution (long term evolution, LTE) system, a 4th generation mobile communication (4th generation mobile communication, 4G) system, a 5th generation mobile communication (5th generation mobile communication, 5G) system, an evolved communication system after 5G like a 6th generation mobile communication (6th generation mobile communication, 6G) system, and wireless communication systems such as a satellite communication system and a short distance communication system. The wireless communication system mentioned in embodiments of this application includes but is not limited to a 5G/6G mobile communication system in three major application scenarios: enhanced mobile broadband (enhanced mobile broadband, eMBB), ultra-reliable low-latency communication (ultra-reliable low-latency communication, URLLC), and massive machine-type communication (massive machine type communication, mMTC), a long-range (long range, LoRa) internet of things system, or a vehicle-to-everything system. The wireless communication system may include one or more network devices and one or more terminal devices.

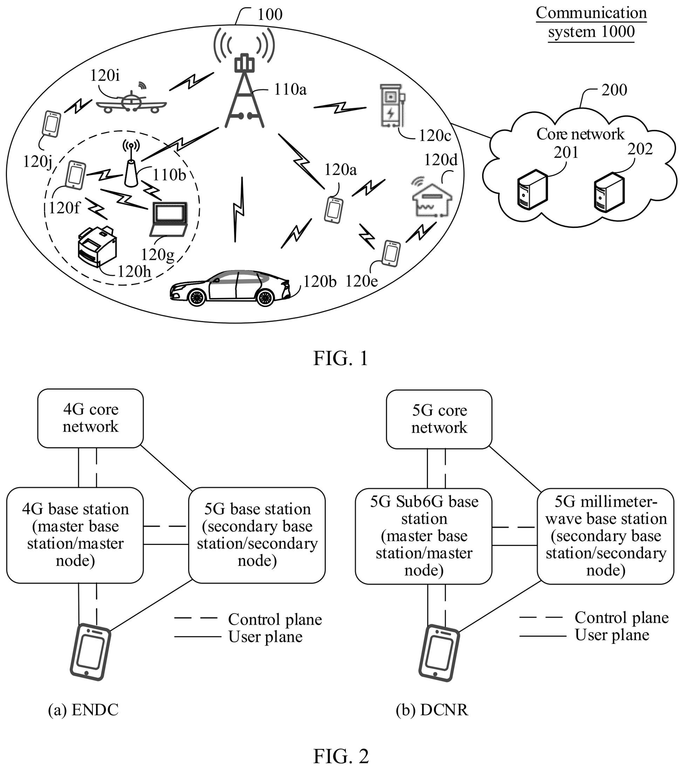

The following uses a system architecture shown in FIG. 1 as an example for description. A communication system 1000 includes a radio access network (radio access network, RAN) 100 and a core network (core network, CN) 200. The RAN 100 includes at least one network device (for example, 110a and 110b shown in FIG. 1, which are collectively referred to as 110) and at least one terminal device (for example, 120a to 120j shown in FIG. 1, which are collectively referred to as 120). The RAN 100 may further include another RAN node, for example, a wireless relay device and/or a wireless backhaul device (not shown in FIG. 1). The terminal device 120 is connected to the network device 110 in a wireless manner. The network device 110 is connected to the core network 200 in a wireless or wired manner. A core network device in the core network 200 and the network device 110 in the RAN 100 may be different physical devices, or may be a same physical device that integrates a logical function of the core network and a logical function of the radio access network.

The core network 200 is mainly responsible for providing a device connection, managing a device, completing service bearing, and serving as a bearer network to provide an interface to an external network. The core network 200 may be an LTE core network, a 4G core network, a 5G core network, a 6G core network, or the like. This is not limited in this application. The core network 200 may include one or more core network devices. As shown in FIG. 1, the core network 200 may include a mobility management device 201 and a home management device 202. The mobility management device 201 is mainly configured for access control and mobility management of the terminal device. The home management device 202 is mainly configured to perform identity authentication and authorization, subscription management, and the like on the terminal device.

For example, if the core network 200 is the 4G core network or the LTE core network, the mobility management device 201 may be a mobility management entity (mobility management entity, MME) device, or may be referred to as an MME network element; and the home management device 202 may be a home subscriber server (home subscriber server, HSS), or may be referred to as an HSS network element. The MME is mainly responsible for mobility management, bearer management, user authentication, selection of a serving gateway (serving gateway, SGW) and a packet data network gateway (packet network gateway, PGW), and the like. The HSS is mainly responsible for managing subscription data of a subscriber and location information of a mobile subscriber. If the core network 200 is the 5G core network, the mobility management device 201 may be an access and mobility management function (access and mobility management function, AMF) network element, and the home management device 202 may be a unified data management (unified data management, UDM) function network element.

It should be noted that the RAN 100 may be a cellular system related to the 3rd generation partnership project (3rd generation partnership project, 3GPP), for example, a 4G mobile communication system, a 5G mobile communication system, or an evolved system after 5G (for example, a 6G mobile communication system). The RAN 100 may alternatively be an open access network (open RAN, O-RAN, or ORAN), a cloud radio access network (cloud radio access network, CRAN), or the like. The RAN 100 may alternatively be a communication system that integrates the foregoing two or more systems. It should be noted that quantities of network devices, terminal devices, and core network devices in FIG. 1 are merely examples, and should not be considered as a specific limitation on this application. The following describes in detail the terminal device and the network device that are related to the system architecture.

### I. Terminal device

The terminal device may also be referred to as user equipment (user equipment, UE), a mobile station (mobile station, MS), a mobile terminal (mobile terminal, MT), or the like, or is a device that is configured to provide voice or data connectivity for a user, or may be an internet of things device. For example, the terminal device includes a handheld device, a vehicle-mounted device, or the like that has a wireless connection function. Currently, the terminal device may be: a mobile phone, a tablet computer, a notebook computer, a palmtop computer, a mobile internet device (mobile internet device, MID), a wearable device (for example, a smartwatch, a smart band, or a pedometer), a vehicle-mounted device (for example, an automobile, a bicycle, an electric vehicle, an airplane, a ship, a train, or a high-speed railway), a satellite terminal, a virtual reality (virtual reality, VR) device, an augmented reality (augmented reality, AR) device, a smart point of sale (point of sale, POS) terminal, customer-premises equipment (customer-premises equipment, CPE), a wireless terminal in industrial control, a smart home device (for example, a refrigerator, a television, an air conditioner, or an electricity meter), an intelligent robot, a mechanical arm, a workshop device, a wireless terminal in self driving, a wireless terminal in telemedicine, a wireless terminal in a smart grid (smart grid), a wireless terminal in transportation safety, a wireless terminal in a smart city, a wireless terminal in a smart home, a flight device (for example, an intelligent robot, a hot air balloon, an uncrewed aerial vehicle, or an airplane), or the like. The terminal device may alternatively be another device having a terminal function. For example, the terminal device may alternatively be a device functioning as a terminal in D2D communication.

A device form of the terminal is not limited in embodiments of this application. An apparatus configured to implement a function of the terminal device may be a terminal device, or may be an apparatus, for example, a chip system, that can support the terminal device in implementing the function. The apparatus may be installed in a terminal device or used in cooperation with the terminal device. In this embodiment of this application, the chip system may include a chip, or may include a chip and another discrete device.

### II. Network device

The network device is a node in the radio access network (radio access network, RAN), or may be referred to as an access network device, or may also be referred to as a RAN node (or device). The network device is configured to help the terminal device implement wireless access. A plurality of network devices 110 in the communication system 1000 may be nodes of a same type, or may be nodes of different types. In some scenarios, a role of the network device 110 and a role of the terminal device 120 are relative to each other. For example, a network element 120i in FIG. 1 may be a helicopter or an uncrewed aerial vehicle, and may be configured as a mobile base station. For those terminal devices 120j that access the RAN 100 through the network element 120i, the network element 120i is a base station. However, for a base station 110a, the network element 120i is a terminal device. The network device 110 and the terminal device 120 are sometimes referred to as communication apparatuses. For example, network elements 110a and 110b in FIG. 1 may be understood as communication apparatuses functioning as the base station, and network elements 120a to 120j may be understood as communication apparatuses functioning as the terminal.

In a possible scenario, the network device may be a base station (base station), an evolved NodeB (evolved NodeB, eNodeB), a transmission reception point (transmission reception point, TRP), a transmitting point (transmitting point, TP), a next generation NodeB (next generation NodeB, gNB), a next generation base station in a 6th generation (6th generation, 6G) mobile communication system, a base station in a future mobile communication system, a satellite, an integrated access and backhaul (integrated access and backhaul, IAB) node, or an access network device in a mobile switching center-based non-terrestrial network (non-terrestrial network, NTN) communication system, that is, may be deployed on a high-altitude platform, a satellite, or the like. The access network device may be a macro base station (for example, 110a in FIG. 1), a micro base station, an indoor base station (for example, 110b in FIG. 1), a relay node, a donor node, or a radio controller in a CRAN scenario. The access network device may alternatively be a device functioning as a base station in device-to-device (device-to-device, D2D) communication, vehicle-to-everything communication, uncrewed aerial vehicle communication, or machine-to-machine communication. Optionally, the access network device may alternatively be a server, a wearable device, a vehicle, a vehicle-mounted device, or the like. For example, an access network device in a vehicle-to-everything (vehicle-to-everything, V2X) technology may be a road side unit (road side unit, RSU).

All or some functions of the network device in this application may alternatively be implemented by using a software function run on hardware, or may be implemented by using a virtualized function instantiated on a platform (for example, a cloud platform). Alternatively, the network device in this application may be a logical node, a logical module, or software that can implement all or some functions of the access network device.

In another possible scenario, a plurality of network devices work together to assist the terminal device in implementing radio access, and different network devices separately implement some functions of a base station. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or a CU-CP and a CU-UP), the DU, or the RU may also have different names, and persons skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

A form of the network device is not limited in embodiments of this application. An apparatus configured to implement a function of the network device may be a network device, or may be an apparatus, for example, a chip system, that can support the network device in implementing the function. The apparatus may be installed in the network device or used in cooperation with the network device.

For ease of understanding content of this solution, the following further describes some terms in embodiments of this application, to facilitate understanding for persons skilled in the art. This part is merely for ease of understanding, and cannot be considered as a specific limitation on this application.

### 1. Non-standalone (non-standalone, NSA)

The non-standalone means that an existing 4G infrastructure is used for deployment of a 5G network. A 5G carrier based on an NSA architecture carries only user data, and transmission of control signaling of the 5G carrier is still performed via a 4G network.

An NSA terminal is a terminal device that supports the NSA. In other words, the NSA terminal is a terminal device that has subscribed to NSA dual connectivity, and may support the non-standalone architecture and dual connectivity in the non-standalone architecture.

### 2. Dual connectivity (dual connectivity, DC)

The dual connectivity means that a terminal device is connected to two base stations. A dual connectivity technology between an LTE network and the 5G network (or between the 4G network and the 5G network) may be referred to as LTE/5G dual connectivity. An LTE/5G dual connectivity technology may be used to implement interconnection between an LTE system and a 5G system, so as to improve radio resource utilization of an entire mobile network system, reduce a system switching delay, and improve user and system performance. Specifically, with the LTE/5G dual connectivity technology, in an early stage of 5G development, 5G deployment may be quickly implemented based on an existing LTE core network. In a late stage, comprehensive network coverage may be implemented by using combined networking of LTE and 5G, to improve the radio resource utilization of the entire network system, reduce the system switching delay, and improve the system performance.

The NSA dual connectivity is the dual connectivity in the non-standalone architecture. The NSA dual connectivity may include evolved radio access network and new radio access dual connectivity (E-UTRAN-NR dual connectivity, ENDC), and dual connectivity with new radio (dual connectivity with new radio, DCNR).

### (1) ENDC

The ENDC indicates dual connectivity between the 4G network and the 5G network. For example, refer to (a) in FIG. 2. A master base station of a terminal device is a 4G base station, a secondary base station is a 5G base station, and the master base station and the secondary base station access a 4G core network. The master base station may also be referred to as a master node (master node, MN) or (master evolved NodeB, MeNB). The secondary base station may also be referred to as a secondary node (secondary node, SN) or (secondary next generation NodeB, SgNB).

An ENDC capability of the terminal device may indicate whether the terminal device supports the ENDC. A network device may query for the ENDC capability of the terminal device. Correspondingly, the terminal device may report the ENDC capability of the terminal device to the network device. For example, the network device may send air interface capability query information to the terminal device, to query for the ENDC capability of the terminal device. When receiving the air interface capability query information, the terminal device may send radio capability information to the network device, where the radio capability information may include the ENDC capability. For example, the radio capability information may include an ENDC field, and the field may indicate the ENDC capability of the terminal device. For example, if a value of the ENDC field is 0, it indicates that the terminal device does not support the ENDC. If a value of the ENDC field is 1, it indicates that the terminal device supports the ENDC.

### (2) DCNR

The DCNR indicates dual connectivity between two 5G networks with different frequency bands. Both a master base station and a secondary base station of the terminal device are 5G base stations, and the master base station and the secondary base station access a 5G core network. For example, refer to (b) in FIG. 2. The master base station of the terminal device may be a 5G base station (which may be referred to as a 5G Sub6G base station) using a frequency band below 6 GHz (450 MHz to 6 GHz), and the secondary base station may be a 5G millimeter-wave base station.

A DCNR capability of the terminal device may indicate whether the terminal device supports the DCNR. After accessing the 4G network, the terminal device may report the DCNR capability to a mobility management device through the network device. For example, the terminal device may report network capability information to the network device, where the network capability information may include the DCNR capability. The network device may forward the network capability information to the mobility management device. When receiving the network capability information, the mobility management device may determine, based on the DCNR capability, whether the terminal device supports the DCNR. For example, the network capability information may include a DCNR field, and a value of the field indicates the DCNR capability of the terminal device. For example, if a value of the DCNR field is 1, it indicates that the terminal device supports the DCNR. If a value of the DCNR field is 0, it indicates that the terminal device supports the DCNR.

As specified in a protocol, the terminal device needs to report, to the mobility management device in the core network, that the DCNR is supported, and report, to the network device, that the ENDC is supported, so that the terminal device can normally work in the NSA architecture. For some exceptions (for example, terminal overheat protection), the terminal device may choose to report that the DCNR is not supported. In this case, the terminal device cannot work normally in the NSA architecture, for example, cannot perform NSA dual connectivity.

### 3. Non-access stratum (non-access stratum, NAS)

As a function layer between the terminal device and a core network device (for example, an MME), a NAS layer supports signaling and data transmission between the terminal device and the core network device. Main functions of the NAS layer may include mobility management, call control, session management, identity management, and the like, for example, evolved packet system (evolved packet system, EPS) bearer management, authentication, and mobility management in an idle state of an EPS connection management mode (ECM-IDLE state). It should be noted that signaling and data transmission cannot be performed, via the NAS layer, between the terminal device and the network device or between the network device and the core network device.

Data and signaling whose transmission is performed at the NAS layer may be referred to as a NAS message, that is, signaling and data whose transmission is performed between the terminal device and the mobility management device may be referred to as the NAS message. The NAS message may be classified into an EPS mobility management (EPS mobility management, EMM) message and an EPS session management (EPS session management, ESM) message. EMM includes module functions such as attachment (attach) and detachment (detach). ESM includes module functions such as activation and deactivation on a network side, modification of an EPS bearer context, and a resource request of the terminal device.

### 4. Evolved radio access bearer (evolved radio access bearer, E-RAB)

The E-RAB is a user-plane bearer, and is used for transmission of a voice, data, and a multimedia service between the terminal device and the core network. E-RAB setup is initiated by the core network. After the E-RAB is successfully set up, a basic service is set up, and the terminal device may enter a service use process.

An LTE E-RAB starts from a serving gateway (SGW) and ends at the terminal device, and includes an S1-U bearer and a data radio bearer (data radio bearer, DRB) that are connected in series. Service data entering the LTE system is mainly transmitted via the E-RAB.

When the terminal device is in a connected state, that is, after a context of the terminal device is set up in the network device, the E-RAB may set up, modify, and release a radio access network (E-UTRAN) resource for user plane transmission. In LTE, resource allocation, modification, and release are controlled by a network, and quality of service (quality of service, QoS) corresponding to a bearer (bearer) is also controlled by the network. Therefore, E-UTRAN resource setup and modification are both initiated by the MME, and the MME provides corresponding QoS information for the network device. Although the network device may initiate a request for releasing the E-UTRAN resource, a release process is controlled by the MME. In addition, the MME may initiate E-UTRAN resource release.

### 5. Attach (attach)

An attachment process is a registration process in which the terminal device is connected to the LTE network for a first time. In this process, identity authentication, key negotiation, and the like need to be completed, and a main purpose of the attachment process is to enable the LTE network to recognize and identify the terminal device, to facilitate subsequent communication. The terminal device may request to start the attachment process by sending attach request (attach request) information to the network device. For example, the process may include: The terminal device registers with a public land mobile network (public land mobile network, PLMN), and camps on a cell; the network device and the mobility management device set up a default bearer for the terminal device, including a signaling radio bearer (signaling radio bearer, SRB) and a data radio bearer (data radio bearer, DRB); and the like. After completing the attachment process, the terminal device may start data transmission and communication via the LTE network.

The attach request information of the terminal device is sent to the mobility management device through the network device, and is used for requesting the mobility management device to accept an attach request of the terminal device. The attach request information is transmitted at the non-access stratum, and the mobility management device may parse the attach request information, but the network device cannot parse the attach request information.

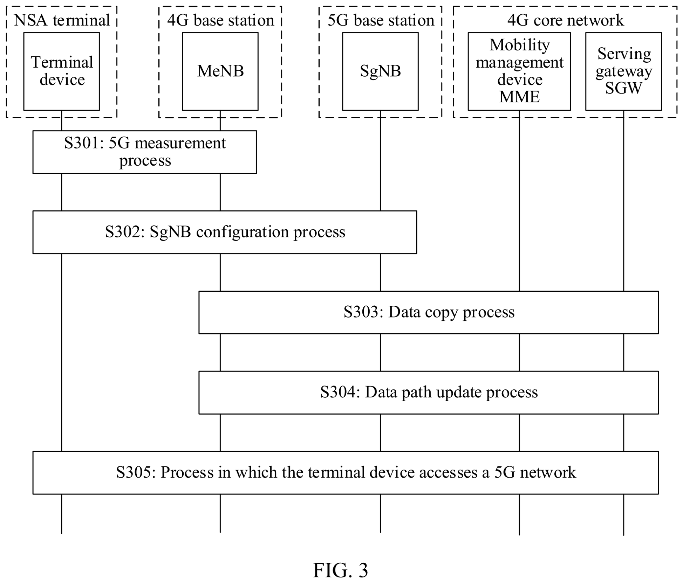

For example, FIG. 3 is a schematic flowchart of secondary base station addition according to an embodiment of this application. After successfully accessing a 4G network, a terminal device may perform a secondary base station addition procedure shown in FIG. 3, which may also be referred to as a secondary node (SgNB) addition procedure, to implement ENDC. The terminal device is an NSA terminal, that is, a terminal device that has subscribed to NSA dual connectivity. A 4G core network may include a mobility management device (MME) and a serving gateway (serving gateway, SGW).

As shown in FIG. 3, the secondary base station addition procedure may include but is not limited to the following processes.

S301: 5G measurement (5G measurement) process.

The 5G measurement process may include: An MeNB sends RRC connection reconfiguration (RRC connection reconfiguration) information to the terminal device. The terminal device performs 5G measurement when receiving the RRC connection reconfiguration information. The terminal device may send a measurement report to the MeNB after completing the 5G measurement. The measurement report may include reference signal received power (reference signal received power, RSRP), a signal to interference plus noise ratio (signal to interference plus noise ratio, SINR), and the like of one or more 5G cells, an absolute radio frequency channel number (absolute radio frequency channel number, ARFCN) of a 5G network, and the like.

S302: Secondary base station configuration (SgNB addition) process.

After receiving the measurement report, the MeNB may trigger the secondary base station configuration process. For example, the secondary base station configuration process may include the following processes:
(1) The MeNB sends a secondary base station addition request (SgNB addition request) message to the SgNB, where the secondary base station addition request message includes the measurement report, and is used for requesting to add the secondary base station. The measurement report may be the measurement report in S301, or may be a part of the measurement report in S301. When receiving the secondary base station addition request message, the SgNB may select, based on the measurement report, a 5G cell that meets a condition (for example, select a 5G cell with highest RSRP), and determine configuration information of the 5G cell. After determining the configuration information, the SgNB sends secondary base station addition request acknowledge (SgNB addition request acknowledge) information to the MeNB, to indicate that the addition of the secondary base station has been agreed. The configuration information may include 5G random access channel (random access channel, RACH) configuration information, a cell-radio network temporary identifier (cell-radio network temporary identifier, C-RNTI), a channel quality indicator (channel quality indicator, CQI), a sounding reference signal (sounding reference signal, SRS), and the like.
(2) After receiving the secondary base station addition request acknowledge information, the MeNB sends the RRC connection reconfiguration (RRC connection reconfiguration) information to the terminal device, to configure a signaling radio bearer (signaling radio bearer, SRB) SRB 3 and a DRB of the terminal device. The RRC connection reconfiguration information may include configuration information of the SRB 3 and the DRB. Optionally, the RRC connection reconfiguration information may further include the 5G RACH configuration information, a physical cell identifier (physical cell identifier, PCI) of a secondary cell of the terminal device, the C-RNTI, a frequency, and the like.

The terminal device implements RRC connection reconfiguration by receiving the RRC connection reconfiguration information. After the RRC connection reconfiguration, the terminal device sends RRC connection reconfiguration complete (RRC connection reconfiguration complete) information to the SgNB through the MeNB, so that the SgNB can confirm that the RRC connection reconfiguration is completed.

S303: Data copy (the eNodeB starts copying data to the gNodeB) process.

It may be understood that the data copy process is a process in which the master base station copies data to the secondary base station in the ENDC. For a specific implementation process of the process, refer to specific descriptions in a related protocol. Details are not described herein again.

S304: Data path update (path update procedure) process.

In this process, the MeNB sends E-RAB modification indication (E-RAB modification indication) information to the MME, to notify the MME that a user-plane data bearer is being switched from the 4G network to the 5G network.

When receiving the E-RAB modification indication information, the MME may determine, based on a DCNR field reported by the terminal device, whether the terminal device supports DCNR. When the DCNR field indicates that the terminal device reports that the DCNR is supported, the MME sends modify bearer request (modify bearer request) information to the SGW, to request the SGW to update the user-plane data bearer (namely, a user-plane data path) of the terminal device. After receiving the modify bearer request information, the SGW may switch the user-plane data path of the terminal device from the MeNB to the SgNB. After updating the user-plane data bearer of the terminal device, the SGW may send modify bearer response (modify bearer response) information to the MME. Then, the MME sends E-RAB modification confirmation (E-RAB modification confirmation) information to the MeNB, to indicate that the user-plane data bearer of the terminal device has been updated.

S305: The terminal device accesses the 5G network.

After the data path update is completed, the terminal device may perform signal synchronization with the SgNB. The terminal device may obtain a 5G primary synchronization signal from the SgNB, to perform downlink frame boundary synchronization; and obtain a 5G secondary synchronization signal from the SgNB, to perform downlink subframe boundary synchronization. After the terminal device implements downlink synchronization with the SgNB, the terminal device may trigger a process of random access to the SgNB (random access procedure). After completing random access to the SgNB, data transmission may start between the SgNB and the terminal device. Data from the terminal device may be directly routed from a 4G SGW to a 5G SGW, to implement the ENDC.

In step S304, if the DCNR field reported by the terminal device indicates that the terminal device does not support the DCNR, the MME does not respond to the E-RAB modification indication information from the MeNB, and does not request the SGW to update the user-plane data bearer of the terminal device. Because the MeNB does not receive the E-RAB modification confirmation information from the MME, the MeNB sends the E-RAB modification indication information for a plurality of times. As a result, a timer times out, and the terminal device is abnormally released, finally causing a service drop of the terminal device.

In the foregoing processes, an NSA dual connectivity capability of the terminal device may include a DCNR capability and an ENDC capability. Based on a protocol requirement, the terminal device needs to report the DCNR capability to the MME and report the ENDC capability to the MeNB. In this case, the terminal device can work normally in an NSA architecture, for example, perform NSA dual connectivity.

It should be noted that the DCNR capability of the terminal device is transmitted in a form of a NAS message. The MeNB cannot parse a NAS message. Therefore, the MeNB cannot learn, based on the NAS message, whether the terminal device supports the DCNR. The MME can parse the NSA message. Therefore, the MME usually learns, based on a DCNR field in the NAS message, whether the terminal supports the DCNR. When the MeNB queries for air interface capability information from the terminal device, the terminal device may report the ENDC capability to the MeNB based on a requirement of the MeNB.

In some cases, the terminal device may report, to the MME, that the DCNR is not supported, but may report, to the MeNB, that the ENDC is supported. Examples are as follows:
(1) In a non-standalone case, the terminal device has high power consumption when performing NSA dual connectivity. In comparison with separate access to the 4G network (or an LTE network) in a standalone case, the terminal device is more likely to overheat. In this case, the terminal device may perform terminal overheat protection. The terminal overheat protection is a mechanism of taking a corresponding measure to reduce a temperature of the terminal device. For example, the terminal device may choose to stop the NSA dual connectivity, and access only the 4G network. In this way, consumption of power needed by the terminal device to maintain a network connection can be reduced, thereby mitigating overheating in the terminal device.
(2) An exception protection mechanism may be configured in the terminal device by default. The exception protection mechanism may be used to control the terminal device not to report the NSA dual connectivity capability within a preset time period, so that NSA dual connectivity is not performed. For example, in a previous period of time (for example, within 10 minutes before a current moment), an abnormal service drop has occurred on the terminal device. For example, a user carries the terminal device and enters a place like an elevator with a weak 5G signal or with no 5G signal. As a result, the terminal device cannot receive the 5G signal, and a service drop is caused. In this case, the terminal device may choose not to report the DCNR capability within the preset time period, to reduce the abnormal service drop in the 5G network. After the preset time period expires, the DCNR capability may be reported again, to request to perform NSA dual connectivity.

As shown in FIG. 3, in a process of accessing the core network, the terminal device first needs to interact with the MeNB. The MeNB learns, by querying for an air interface capability of the terminal device, that the terminal device supports the ENDC, and then sends secondary base station addition request information to the SgNB, to add a secondary base station for the terminal device. After the secondary base station is added, the MeNB sends the E-RAB modification indication information to the MME, to request to switch the user-plane data path of the terminal device from the MeNB to the SgNB. After receiving the request information, the MME determines, based on the DCNR field, whether the terminal device supports the DCNR. The MME sends the E-RAB modification confirmation information to the MeNB only when the terminal device supports the DCNR. When the terminal device does not support the DCNR, the MME does not respond to the E-RAB modification indication information from the MeNB, that is, does not send the E-RAB modification confirmation information to the MeNB. If the MeNB does not receive the E-RAB modification confirmation information, the MeNB continuously sends E-RAB modification request information until the timer times out. Finally, the terminal device is released by the MME, and the service drop may be caused for the terminal device in the 5G network.

It may be understood that an NSA dual connectivity scenario described in this embodiment of this application is intended to describe the technical solutions in embodiments of this application more clearly, and does not constitute a limitation on the technical solutions and application scenarios provided in embodiments of this application. Persons skilled in the art may learn that, with the evolution of a system architecture and emergence of a new service scenario, the technical solutions provided in embodiments of this application are also applicable to a similar technical problem, for example, a service drop problem of a terminal device in a dual connectivity scenario in the 5G network and a 6G network.

To resolve the foregoing problems, this application provides a network configuration method, to ensure communication quality of a terminal device.

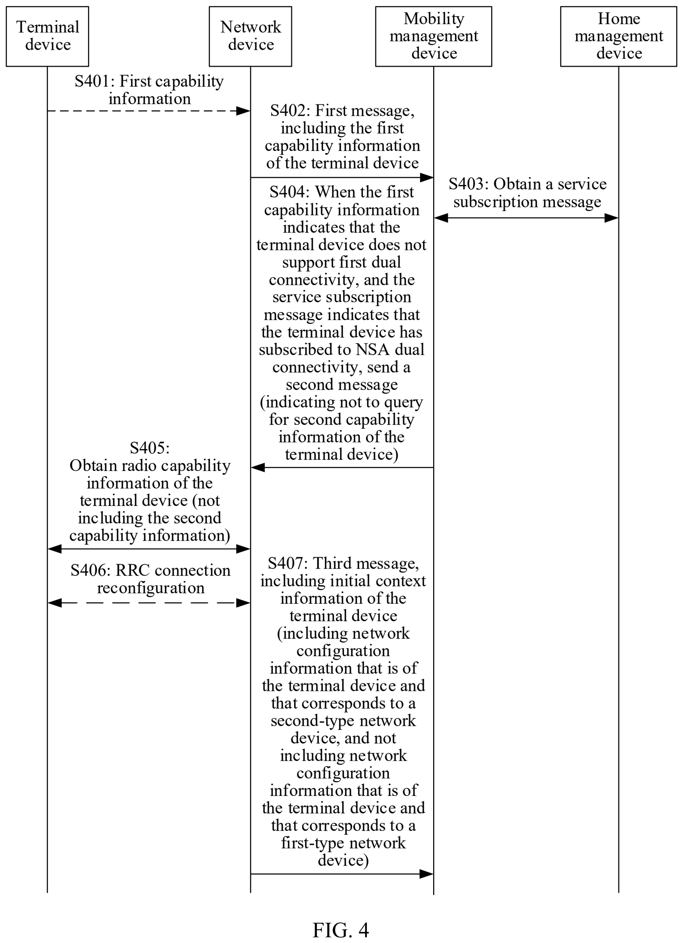

FIG. 4 is a schematic flowchart of a network configuration method according to an embodiment of this application. The method may include but is not limited to the following steps.

Optionally, in S401, a terminal device sends first capability information to a network device. Correspondingly, the network device receives the first capability information from the terminal device.

The first capability information indicates whether the terminal device supports first dual connectivity. The first dual connectivity is dual connectivity in which both a master base station and a secondary base station of the terminal device are first-type network devices. The first-type network device includes 5G base stations such as a 5G millimeter-wave base station and a 5G Sub6G base station. For example, the first dual connectivity may be the DCNR shown in (b) in FIG. 2, in other words, the first dual connectivity may be the DCNR. Therefore, it may also be described as that the first capability information indicates whether the terminal device supports the DCNR. Optionally, the first capability information may include a DCNR field. If a value of the DCNR field is 0, it indicates that the terminal device does not support the first dual connectivity. If a value of the DCNR field is 1, it indicates that the terminal device supports the first dual connectivity.

It should be noted that the first capability information is usually carried in a NAS message, but the network device cannot parse the NAS message. Therefore, specific content indicated by the first capability information is unknown to the terminal device. The network device is mainly responsible for forwarding the first capability information to a mobility management device, and the mobility management device may determine, based on the first capability information, whether the terminal device supports the first dual connectivity. Optionally, in this embodiment of this application, the network device may be a 4G base station, and the mobility management device may be an MME.

Optionally, the first capability information may be carried in network capability information. In other words, the network capability information may include the first capability information. Optionally, the network capability information may further include one or more of the following information: an encryption algorithm and an integrity algorithm supported by the terminal device, proximity service (proximity service, ProSe) capability information, vehicle-to-everything (vehicle-to-everything, V2X) capability information, or the like. The encryption algorithm and the integrity algorithm supported by the terminal device are used to set up a NAS security mode between the terminal device and the mobility management device. The proximity service capability information indicates whether the terminal device supports direct communication (without cellular network relay) by using a cell radio resource. The vehicle-to-everything capability information indicates whether the terminal device supports a vehicle-to-everything service.

In a possible implementation, the network capability information may be carried in attach request information. In other words, the attach request information may include the first capability information. The attach request information is used for requesting an attachment process of the terminal device. Optionally, when an RRC connection is set up, the terminal device may send RRC connection setup complete (RRC connection setup complete) information to the network device, and include the attach request information in the RRC connection setup complete information, to request the attachment process. In other words, the RRC connection setup complete information may include the first capability information.

S402: The network device sends a first message to the mobility management device. Correspondingly, the mobility management device receives the first message from the network device. The first message includes the first capability information of the terminal device.

The first capability information indicates that the terminal device supports or does not support the first dual connectivity. In other words, the first capability information indicates that the terminal device supports or does not support the DCNR.

In a possible implementation, the first message may be an initial user equipment message (initial user equipment message), and includes the first capability information of the terminal device. Optionally, the first message may include the attach request information. Optionally, the first message may further include network capability information other than the first capability information reported by the terminal device to the network device, for example, the foregoing information such as the encryption algorithm and the integrity algorithm supported by the terminal device.

S403: The mobility management device obtains service subscription information of the terminal device from a home management device.

The service subscription information indicates whether the terminal device has subscribed to NSA dual connectivity. It may also be described as that the service subscription information indicates whether the terminal device has subscribed to an NSA dual connectivity service. The NSA dual connectivity includes the first dual connectivity and second dual connectivity. The second dual connectivity is dual connectivity in which a master base station of the terminal device is a second-type network device, and a secondary base station is a first-type network device. The first-type network device may be a 5G base station, and the second-type network device may be a 4G base station. For example, the second dual connectivity may be the ENDC shown in (a) in FIG. 2, the master base station of the terminal device is the 4G base station, the secondary base station is the 5G base station, and the master base station and the secondary base station access a 4G core network. In other words, the second dual connectivity may be the ENDC. Optionally, the network device in this embodiment of this application may be the second-type network device.

If the service subscription information indicates that the terminal device has subscribed to the NSA dual connectivity, the terminal device may be referred to as an NSA terminal. Based on a protocol requirement, the NSA terminal needs to report, to the network device, that the ENDC is supported, and send, to the mobility management device through the network device, a support for the DCNR, so that the dual connectivity can be performed.

Optionally, obtaining the service subscription information of the terminal device from the home management device may include: The mobility management device may send subscription query information to the home management device, to request the service subscription information of the terminal device. Optionally, the subscription query information may include identifier information of the terminal device. When receiving the subscription query information, the home management device may obtain the service subscription information based on the identifier information of the terminal device, and send subscription query response information to the mobility management device, where the subscription query response information includes the service subscription information. Therefore, after receiving the subscription query response information, the mobility management device may determine, based on the service subscription information, whether the terminal device has subscribed to the NSA dual connectivity.

In a possible implementation, the first message may further include identity information of the terminal device. Before obtaining the service subscription information, the mobility management device may send authentication request information to the home management device, to request to perform identity authentication on the terminal device. When receiving the authentication request information, the home management device may perform identity authentication on the terminal device based on the identity information of the terminal device, and send authentication response information to the mobility management device, to indicate whether the identity authentication on the terminal device succeeds. Optionally, the identity information of the terminal device may include information such as an international mobile equipment identity (international mobile equipment identity, IMEI) or a network ID. When the authentication response information indicates that the identity authentication on the terminal device succeeds, the mobility management device may obtain the service subscription information of the terminal device from the home management device.

S404: When the first capability information indicates that the terminal device does not support the first dual connectivity, and the service subscription information indicates that the terminal device has subscribed to the NSA dual connectivity, the mobility management device sends a second message to the network device. Correspondingly, the network device receives the second message from the mobility management device. The second message indicates the network device not to query for second capability information of the terminal device. The second capability information indicates that the terminal device supports or does not support the second dual connectivity.

The second dual connectivity may be the ENDC. In other words, the second capability information indicates that the terminal device supports or does not support the ENDC. Usually, the network device may query for the second capability information of the terminal device, to determine whether the terminal device supports the ENDC. If the network device has determined that the terminal device supports the ENDC, the network device initiates the secondary base station addition procedure shown in FIG. 3. If the network device has determined that the terminal device does not support the ENDC, the network device does not initiate the secondary base station addition procedure.

In a possible implementation, the second message may include a limit second connection information element (nRrestrictedinEPSasSecondaryRAT), and the limit second connection information element indicates the network device not to query for the second capability information of the terminal device.

In a possible implementation, the second message may be an initial context setup request (initial context setup request) message, and is used for requesting the network device to set up initial context information of the terminal device. In other words, the second message indicates the network device not to query for the second capability information of the terminal device, and is further used for requesting the network device to set up the initial context information of the terminal device. The initial context information of the terminal device is set up to set up a default bearer of the terminal device, including a signaling radio bearer (SRB) and a data radio bearer (DRB) of the terminal device.

S405: The network device obtains radio capability information of the terminal device from the terminal device. The radio capability information does not include the second capability information of the terminal device.

For example, the radio capability information of the terminal device may include a frequency list supported by the terminal device, a supported combination of frequency bands for carrier aggregation (carrier aggregation, CA), a terminal device category (UE Category), a PDCP parameter, a radio link control (radio link control, RLC) parameter, a physical layer parameter, a radio frequency (radio frequency, RF) parameter, and the like. The UE category indicates information such as a maximum download rate and a maximum upload rate that can be reached by the terminal device, and the network device may determine a transmission capability of the terminal device based on the UE category. The RF parameter may indicate information such as a frequency band and a duplex mode that are supported by the terminal device.

In a possible implementation, that the network device obtains the radio capability information of the terminal device from the terminal device may include: The network device may send a fourth message to the terminal device, to indicate the terminal device to report the radio capability information, where the radio capability information does not include the second capability information. The terminal device reports the radio capability information to the network device when receiving the fourth message. Optionally, the fourth message may be air interface capability query information, and indicates the terminal device to report the radio capability information.

In a possible implementation, the network device may send the obtained radio capability information of the terminal device to the mobility management device, so that the mobility management device can update the stored capability information of the terminal device.

In this application, the mobility management device may determine, based on the first capability information, that the terminal device does not support the first dual connectivity. However, the network device cannot parse the first capability information, and therefore cannot determine whether the terminal device supports the first dual connectivity. Usually, the terminal device determines, by sending the air interface capability query information to the terminal device, whether the terminal device supports the second dual connectivity. Usually, the terminal device that has subscribed to the NSA dual connectivity reports, to the network device, that the second dual connectivity is supported.

For example, as shown in step S301 to step S305 in FIG. 3, when the network device determines that the terminal device supports the second dual connectivity, after the terminal device generates a measurement report, the network device sends a secondary base station addition request to the SgNB, to add a secondary base station for the terminal device. After the secondary base station addition is completed with the SgNB, the network device (namely, the MeNB shown in FIG. 3) sends E-RAB modification indication information to the mobility management device, to request to switch a user-plane data path of the terminal device from the network device to the SgNB. After receiving the indication information, the mobility management device determines, based on the first capability information, whether the terminal device supports the first dual connectivity. When the terminal device does not support the first dual connectivity, the mobility management device does not respond to the E-RAB modification indication information from the network device, that is, does not send E-RAB modification confirmation information to the network device. If the network device does not receive the confirmation information, the network device continuously sends the E-RAB modification indication information until a timer times out. Finally, the terminal device is abnormally released by the mobility management device, causing a service drop for the terminal device in a 5G network.

Based on this, if the network device does not query for the second capability information of the terminal device, the network device does not initiate the secondary base station addition procedure shown in FIG. 3, and the terminal device does not need to perform NSA dual connectivity. Further, the service drop can be avoided for the terminal device in the foregoing case.

Optionally, in S406, RRC connection reconfiguration is performed.

In this process, the network device may send RRC connection reconfiguration information to the terminal device, where the RRC connection reconfiguration information includes the initial context information of the terminal device. The terminal device may implement the RRC connection reconfiguration by receiving the RRC connection reconfiguration information. In other words, the terminal device may accept, through the RRC connection reconfiguration, the initial context information configured by the network device for the terminal device. When completing the RRC connection reconfiguration, the terminal device may send RRC connection reconfiguration complete information to the network device. Based on this, the network device performs the following step S407 when receiving the RRC connection reconfiguration complete information from the terminal device.

The initial context information includes network configuration information that is of the terminal device and that corresponds to the second-type network device, and does not include network configuration information that is of the terminal device and that corresponds to the first-type network device. Optionally, the network device may determine the initial context information of the terminal device based on the initial context setup request information and the radio capability information that is of the terminal device. The network configuration information may include configuration information of the default bearer of the terminal device, for example, include configuration information of the signaling radio bearer (SRB) and the data radio bearer (DRB). Optionally, the first-type network device may be the 5G base station, and the second-type network device may be the 4G base station. In this case, the network configuration information may include network configuration information that is of the terminal device and that corresponds to the 4G base station. For example, the network configuration information may include configuration information of signaling radio bearers: an SRB 1 and an SRB 2 and the data radio bearer DRB. The SRB 2 is used for transmission of a NAS message and some RRC information, for example, uplink information transfer (UL information transfer) information and downlink information transfer (DL information transfer) information. The network device is only responsible for forwarding the foregoing two pieces of RRC information without processing the information.

Optionally, because the initial context information does not include the network configuration information that is of the terminal device and that corresponds to the first-type network device, for example, does not include network configuration information that is of the terminal device and that corresponds to the 5G base station, the terminal device does not access the 5G network, and the terminal device does not need to perform dual connectivity.

In a possible implementation, the RRC connection reconfiguration information may be further used to notify the terminal device that the attach request information of the terminal device has been accepted by the mobility management device.

S407: The network device sends a third message to the mobility management device. Correspondingly, the mobility management device receives the third message from the network device. The third message includes the initial context information of the terminal device. The initial context information includes the network configuration information that is of the terminal device and that corresponds to the second-type network device, and does not include the network configuration information that is of the terminal device and that corresponds to the first-type network device.

The mobility management device may determine, based on the third message, that the network device has set up the initial context information. Optionally, after receiving the RRC connection reconfiguration complete information from the terminal device, the network device may send the third message to the mobility management device. After the initial context information of the terminal device is set up, the terminal device has successfully accessed a core network connected to the second-type network device, for example, the 4G core network (or an LTE core network). Based on this, service communication may be performed between the terminal device and the mobility management device, and the terminal device may obtain stable communication quality via the core network.

In a possible implementation, after the initial context information of the terminal device is set up, the terminal device may send the UL information transfer information to the mobility management device through the network device, where the UL information transfer information may include attach complete (attach complete) information and default bearer activation accept (activate default EPS bearer context accept) information. Based on the information, the mobility management device may determine that the terminal device has completed the attachment process, so that the mobility management device can perform service communication with the terminal device.

It can be learned that, in this embodiment of this application, when the terminal device has subscribed to the NSA dual connectivity but reports that the first dual connectivity is not supported, the mobility management device may indicate the network device not to query whether the terminal device supports the second dual connectivity. In this way, the initial context information set up for the terminal device does not include the network configuration information that is of the terminal device and that corresponds to the first-type network device, in other words, does not include network configuration information needed for performing NSA dual connectivity. In addition, the network device does not perform a secondary base station addition procedure in a procedure of configuring the NSA dual connectivity for the terminal device, so that the terminal device does not need to perform NSA dual connectivity, but independently accesses a network, for example, accesses only a 4G network, thereby avoiding a service drop risk of the terminal device in an NSA dual connectivity scenario.

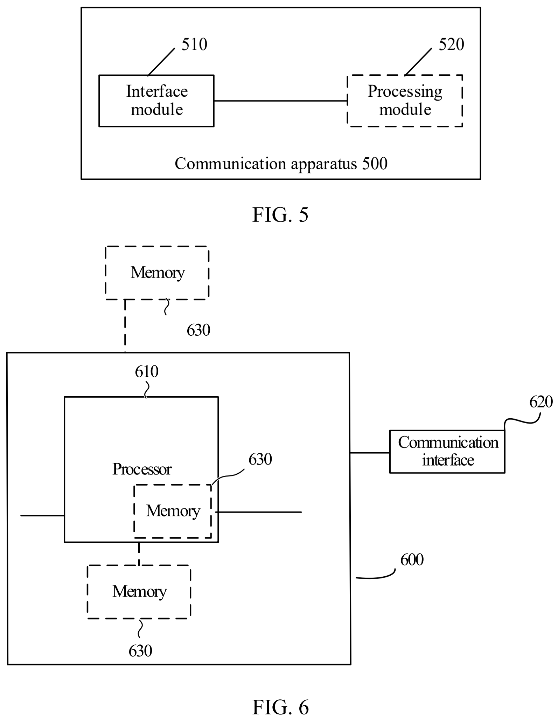

This application provides a communication apparatus, configured to implement a function of the mobility management device or the network device. The communication apparatus may be a mobility management device or a network device. The communication apparatus includes modules or units that are in one-to-one correspondence with the methods/operations/steps/actions performed by the mobility management device or the network device in the foregoing method embodiments. Such a unit may be implemented by a hardware circuit, software, or a combination of a hardware circuit and software. FIG. 5 is a diagram of a structure of a communication apparatus 500 according to an embodiment of this application. The communication apparatus 500 may include an interface module 510, and the interface module 510 is configured to receive data and send data. Optionally, the communication apparatus further includes a processing module 520. Specifically, the processing module 520 is configured to process signaling and/or data, where the signaling and/or data may be data received by the interface module 510, and the processed signaling and/or data may also be sent by the interface module 510.

In an implementation, when the communication apparatus 500 is a mobility management device,
the interface module 510 is configured to: when receiving a first message from a network device, obtain service subscription information of a terminal device from a home management device, where the first message includes first capability information of the terminal device; when the first capability information indicates that the terminal device does not support first dual connectivity, and the service subscription information indicates that the terminal device has subscribed to NSA dual connectivity, send a second message to the network device, where the second message is used for requesting the network device to set up initial context information of the terminal device, the second message indicates the network device not to query second capability information of the terminal device, and the second capability information indicates that the terminal device supports or does not support second dual connectivity; and receive a third message from the network device, where the third message includes the initial context information of the terminal device, and the initial context information includes network configuration information that is of the terminal device and that corresponds to a second-type network device, and does not include network configuration information that is of the terminal device and that corresponds to a first-type network device.

The dual connectivity includes the first dual connectivity and the second dual connectivity. The first dual connectivity is dual connectivity in which both a master base station and a secondary base station of the terminal device are first-type network devices. The second dual connectivity is dual connectivity in which the master base station of the terminal device is a second-type network device and the secondary base station of the terminal device is a first-type network device.

In a possible implementation, the interface module 510 is configured to communicate with the terminal device based on the initial context information that has been set up.

In a possible implementation, the first message includes identity information of the terminal device. The processing module 520 is configured to: send authentication request information to the home management device, where the authentication request information includes the identity information; and receive authentication response information from the home management device, where the authentication response information indicates that identity authentication on the terminal device succeeds.

In a possible implementation, the interface module 510 is configured to: send, to the home management device, subscription query information that is used for requesting the service subscription information of the terminal device; and receive subscription query response information from the home management device, where the subscription query response information includes the service subscription information of the terminal device.

For specific implementations of the interface module 510 and the processing module 520, refer to specific implementation steps of the mobility management device in FIG. 4. Details are not described herein again.

In an implementation, when the communication apparatus 500 is a network device,
the interface module 510 is configured to: when receiving first capability information from a terminal device, send a first message to a mobility management device, where the first message includes the first capability information of the terminal device; receive a second message from the mobility management device, where the second message corresponds to the first capability information, the second message is used for requesting to set up initial context information of the terminal device, and the second message indicates the network device not to query second capability information of the terminal device; and obtain radio capability information of the terminal device from the terminal device based on the second message, where the radio capability information does not include the second capability information. The processing module 520 is configured to generate the initial context information of the terminal device based on the radio capability information. The interface module 510 is configured to send a third message to the mobility management device, where the third message includes the initial context information of the terminal device.

The second capability information indicates that the terminal device supports or does not support second dual connectivity, where the second dual connectivity is dual connectivity in which a master base station of the terminal device is a second-type network device, and a secondary base station of the terminal device is a first-type network device. The initial context information includes network configuration information that is of the terminal device and that corresponds to the second-type network device, and does not include network configuration information that is of the terminal device and that corresponds to the first-type network device.

In a possible implementation, the interface module 510 is configured to: receive attach request information from the terminal device, where the attach request information includes the first capability information of the terminal device; and send the first message to the mobility management device, where the first message includes the first capability information.

In a possible implementation, the interface module 510 is configured to: send a fourth message to the terminal device, where the fourth message indicates the terminal device to report the radio capability information, and the radio capability information does not include the second capability information; and receive the radio capability information from the terminal device.

In a possible implementation, the interface module 510 is configured to send RRC connection reconfiguration information to the terminal device, where the RRC connection reconfiguration information includes the initial context information. The interface module 510 is further configured to send the third message to the mobility management device when receiving RRC connection reconfiguration complete information from the terminal device.

For specific implementations of the interface module 510 and the processing module 520, refer to specific implementation steps of the network device in FIG. 4. Details are not described herein again.

FIG. 6 shows a communication apparatus 600 according to an embodiment of this application. The communication apparatus 600 is configured to implement a function of the mobility management device or the network device. The apparatus may be a communication device or an apparatus used in the communication device, and the communication device may be a mobility management device or a network device. The apparatus used in the communication device may be a chip system or a chip in the communication device. The chip system may include a chip, or may include a chip and another discrete device.

The communication apparatus 600 includes at least one processor 610, configured to implement a processing function of the device (for example, the mobility management device or the network device) in the method provided in embodiments of this application. The communication apparatus 600 may further include a communication interface 620, configured to implement receiving and sending operations of the device (for example, the mobility management device or the network device) in the method provided in embodiments of this application. In embodiments of this application, the communication interface may be a transceiver, a circuit, a bus, a module, or a communication interface of another type, and is configured to communicate with another device through a transmission medium. For example, the communication interface 620 may be used by an apparatus in the communication apparatus 600 to communicate with another device. The processor 610 receives and sends data through the communication interface 620, and is configured to implement the method described in the foregoing method embodiments.

The communication apparatus 600 may further include at least one memory 630, configured to store program instructions and/or data. The memory 630 is coupled to the processor 610. The couplings in embodiments of this application are indirect couplings or communication connections between apparatuses, units, or modules. The couplings may be implemented in an electrical form, a mechanical form, or another form, and is used for information exchange between the apparatuses, the units, or the modules. The processor 610 may cooperate with the memory 630. The processor 610 may execute the program instructions stored in the memory 630. At least one of the at least one memory may be included in the processor.

A specific connection medium between the communication interface 620, the processor 610, and the memory 630 is not limited in embodiments of this application. In this embodiment of this application, the memory 630, the processor 610, and the communication interface 620 in FIG. 6 are connected through a bus. The bus is represented by a thick line in FIG. 6. Another connection manner of the components is merely an example for description and is not intended for limitation. The bus may be classified into an address bus, a data bus, a control bus, and the like. For ease of representation, only one thick line is used to represent the bus in FIG. 6, but this does not mean that there is only one bus or only one type of bus.

When the communication apparatus 600 is specifically an apparatus used in a device (for example, a mobility management device or a network device), for example, when the communication apparatus 600 is specifically a chip or a chip system, the communication interface 620 may output or receive a baseband signal. When the communication apparatus 600 is specifically a device (for example, a mobility management device or a network device), the communication interface 620 may output or receive a radio frequency signal. In embodiments of this application, the processor may be a general-purpose processor, a digital signal processor, an application-specific integrated circuit, a field programmable gate array or another programmable logic device, a discrete gate, a transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly completed by a hardware processor, or may be performed and completed by using a combination of a hardware module and a software module in the processor.

It should be noted that the communication interface 620 may be configured to perform a function of the interface module 510, and the processor 610 may be configured to perform a function of the processing module 520. Details are not described herein again.

When the communication apparatus is a chip used in a mobility management device, a network device chip implements a function of the mobility management device in the foregoing method embodiments. The mobility management device chip receives information from another network element, or the mobility management device chip sends information to another network element.

When the communication apparatus is a chip used in a network device, the network device chip implements a function of the network device in the foregoing method embodiments. The network device chip receives information from another network element, or the network device chip sends information to another network element.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented by hardware, or may be implemented by executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or a storage medium in any other form well-known in the art. For example, a storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in a network device or a terminal device. Certainly, the processor and the storage medium may alternatively exist in the terminal device or the network device as discrete components.

All or some of the foregoing embodiments may be implemented by using software, hardware, firmware, or any combination thereof. When software is used for implementation, all or some of embodiments may be implemented in a form of a computer program product. The computer program product includes one or more computer programs or instructions. When the computer programs or the instructions are loaded and executed on a computer, all or some of the procedures or functions according to embodiments of this application are performed. The computer may be a general-purpose computer, a dedicated computer, a computer network, or another programmable apparatus. The computer programs or the instructions may be stored in a computer-readable storage medium, or may be transmitted through the computer-readable storage medium. The computer-readable storage medium may be any usable medium accessible by the computer, or a data storage device, for example, a server, integrating one or more usable media. The usable medium may be a magnetic medium, for example, a floppy disk, a hard disk, or a magnetic tape; or may be an optical medium, for example, a DVD; or may be a semiconductor medium, for example, a solid state disk (solid state disk, SSD).

In embodiments of this application, unless otherwise stated or logically conflicted, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for distinguishing for ease of description, and are not used to limit the scope of embodiments of this application. Sequence numbers of the foregoing processes do not mean an execution sequence, and the execution sequence of the processes should be determined based on functions and internal logic of the processes.

An embodiment of this application further provides a computer-readable storage medium. The computer-readable storage medium stores computer-executable instructions. When the computer-executable instructions are executed, the method performed by the terminal device or the network device in the foregoing method embodiments is implemented.

An embodiment of this application further provides a computer program product. The computer program product includes a computer program. When the computer program is executed, the method performed by the terminal device or the network device in the foregoing method embodiments is implemented.

An embodiment of this application further provides a communication system. The communication system includes a terminal device or a network device. The terminal device is configured to perform the method performed by the terminal device in the foregoing method embodiments. The network device is configured to perform the method performed by the network device in the foregoing method embodiments.

In the foregoing embodiments, the descriptions of embodiment have respective focuses. For a part that is not described in detail in an embodiment, refer to related descriptions of another embodiment. For ease of description and brevity, for example, for functions and the performed steps of the apparatuses and devices provided in embodiments of this application, refer to the related descriptions in the method embodiments of this application. The method embodiments and the apparatus embodiments may also be mutually referenced or combined.

It should be noted that, for brief description, the foregoing method embodiments are represented as a series of action combinations. However, persons skilled in the art should understand that this application is not limited to the described action sequence, because some steps may be performed in other sequences or simultaneously according to this application. It should be further appreciated by persons skilled in the art that embodiments described in this specification all belong to preferred embodiments, and the involved actions and modules are not necessarily required by this application.

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof. Such modifications or replacements do not make the essence of the corresponding technical solutions depart from the spirit and scope of the technical solutions of embodiments of this application.

## Claims

1. A network configuration method, wherein the method comprises:
when receiving a first message from a network device, obtaining service subscription information of a terminal device from a home management device, wherein the first message comprises first capability information of the terminal device;
when the first capability information indicates that the terminal device does not support first dual connectivity, and the service subscription information indicates that the terminal device has subscribed to non-standalone NSA dual connectivity, sending a second message to the network device, wherein the second message is used for requesting the network device to set up initial context information of the terminal device, the second message indicates not to query for second capability information of the terminal device, the second capability information indicates that the terminal device supports or does not support second dual connectivity, the dual connectivity comprises the first dual connectivity and the second dual connectivity, the first dual connectivity is dual connectivity in which both a master base station and a secondary base station of the terminal device are first-type network devices, and the second dual connectivity is dual connectivity in which a master base station of the terminal device is a second-type network device and a secondary base station of the terminal device is a first-type network device; and
receiving a third message from the network device, wherein the third message comprises the initial context information, and the initial context information comprises network configuration information that is of the terminal device and that corresponds to the second-type network device, and does not comprise network configuration information that is of the terminal device and that corresponds to the first-type network device.

2. The method according to claim 1, wherein the method further comprises:
communicating with the terminal device based on the initial context information.

3. The method according to claim 1 or 2, wherein the first message further comprises identity information of the terminal device; and the method further comprises:
sending authentication request information to the home management device, wherein the authentication request information comprises the identity information of the terminal device; and
receiving authentication response information from the home management device, wherein the authentication response information indicates that identity authentication on the terminal device succeeds.

4. The method according to claim 3, wherein obtaining the service subscription information of the terminal device from the home management device comprises:
sending subscription query information to the home management device, wherein the subscription query information is used for requesting the service subscription information of the terminal device; and
receiving subscription query response information from the home management device, wherein the subscription query response information comprises the service subscription information.

5. A network configuration method, wherein the method comprises:
receiving a second message from a mobility management device, wherein the second message is used for requesting to set up initial context information of a terminal device, the second message indicates not to query for second capability information of the terminal device, the second capability information indicates that the terminal device supports or does not support second dual connectivity, and the second dual connectivity is dual connectivity in which a master base station of the terminal device is a second-type network device and a secondary base station of the terminal device is a first-type network device;
obtaining radio capability information of the terminal device from the terminal device based on the second message, wherein the radio capability information does not comprise the second capability information;
generating the initial context information of the terminal device based on the radio capability information, wherein the initial context information comprises network configuration information that is of the terminal device and that corresponds to the second-type network device, and does not comprise network configuration information that is of the terminal device and that corresponds to the first-type network device; and
sending a third message to the mobility management device, wherein the third message comprises the initial context information of the terminal device.

6. The method according to claim 5, wherein obtaining the radio capability information of the terminal device from the terminal device comprises:
sending a fourth message to the terminal device, wherein the fourth message indicates to report the radio capability information; and
receiving the radio capability information from the terminal device.

7. The method according to claim 5 or 6, wherein the method further comprises:
sending radio resource control RRC connection reconfiguration information to the terminal device, wherein the RRC connection reconfiguration information comprises the initial context information, wherein
sending the third message to the mobility management device comprises:
when receiving RRC connection reconfiguration complete information from the terminal device, sending the third message to the mobility management device.

8. The method according to claim 5, wherein the method further comprises:
receiving attach request information from the terminal device, wherein the attach request information comprises first capability information of the terminal device; and
sending a first message to the mobility management device, wherein the first message comprises the first capability information.

9. A communication apparatus, wherein the communication apparatus comprises a transceiver module and a processing module, wherein the transceiver module and the processing module are used in the communication apparatus to implement the method according to any one of claims 1 to 4 or implement the method according to any one of claims 5 to 8.

10. A communication apparatus, comprising a processor, wherein the processor is coupled to a memory, the memory is configured to store a program or instructions, and when the program or the instructions are executed by the processor, the communication apparatus is enabled to perform the method according to any one of claims 1 to 4 or the method according to any one of claims 5 to 8.

11. A computer-readable storage medium, wherein the computer storage medium stores a computer program or instructions, and when the computer program or the instructions are executed, the method according to any one of claims 1 to 4 or the method according to any one of claims 5 to 8 is implemented.

12. A computer program product, comprising a computer program or instructions, wherein when the computer program or the instructions are executed, a computer is enabled to perform the method according to any one of claims 1 to 4 or the method according to any one of claims 5 to 8.

13. A system, wherein the system comprises a mobility management device and a network device, the mobility management device is configured to perform the method according to any one of claims 1 to 4, and the network device is configured to perform the method according to any one of claims 5 to 8.
